# FASCICULE DE BREVET EUROPEEN

(11) **EP 1 659 039 B1**
(45) Date de publication et mention de la délivrance du brevet: **19.08.2009**
(21) Numéro de dépôt: 05292396.8
(22) Date de dépôt: 10.11.2005
(51) Int. Cl.: B60S 1/50

(54) **Réservoir auto-adaptable notamment pour liquide de lavage**
Selbstanpassender Behälter insbesondere für Waschflüssigkeit
Auto adaptable reservoir in particular for washing liquid

(30) Priorité: 18.11.2004 FR 0412267
(43) Date de publication de la demande: 24.05.2006
(73) Titulaire: VALEO VISION, 93012 Bobigny Cedex (FR)
(72) Inventeur: Richiero, Jean-Louis, 93240 Stains (FR); Penet, Jean-Claude, 77400 Lagny (FR)

(56) Documents cités:
- DE-A1- 3 839 809
- DE-A1- 10 023 066
- DE-U- 1 755 291
- DE-U1- 8 708 006
- GB-A- 765 646

## Description

La présente invention concerne de manière générale un réservoir pour le stockage d'un liquide. Plus particulièrement, l'invention concerne un réservoir monté dans un véhicule, tel que ceux utilisés pour stocker un liquide de lavage destiné à un dispositif lave-glace et/ou un dispositif lave-projecteur.

Dans un véhicule automobile, le réservoir de liquide de lavage est généralement installé dans le compartiment moteur ou dans une partie voisine peu accessible. S'agissant d'un élément dont les contraintes associées ne sont pas prioritaires par rapport à celles d'autres éléments jugés mécaniquement plus importants, le réservoir de liquide de lavage doit parfois se satisfaire pour son implantation du volume restant dans le compartiment moteur. Ce volume restant peut avoir une faible accessibilité et présenter une forme complexe. Il en découle un réservoir d'un coût relativement élevé et dont le montage/démontage dans le véhicule constitue une tâche fastidieuse. Ces réservoirs sont fabriqués dans une matière synthétique rigide telle que le polyéthylène haute densité (PEHD).

Par ailleurs, il est souhaitable aussi de proposer des solutions techniques autorisant l'installation d'un réservoir de liquide de lavage additionnel dans un véhicule.

En effet, une demande existe chez les automobilistes pour un remplacement des projecteurs halogènes de leurs véhicules par des projecteurs d'éclairage de type xénon. Or, un projecteur xénon doit réglementairement être équipé d'un dispositif lave-projecteur, et le réservoir dédié au dispositif lave-glace a rarement une capacité suffisante pour alimenter également le dispositif lave-projecteur.

Il devient alors nécessaire soit de remplacer le réservoir existant par un réservoir de plus grande contenance, soit d'équiper le véhicule d'un réservoir additionnel. Ces deux opérations présentent chacune des difficultés compte tenu de la forte occupation des volumes dans le compartiment moteur du véhicule. De plus, les volumes disponibles pour l'implantation éventuelle d'un réservoir ont des formes très diverses selon les constructeurs et les modèles des véhicules.

Le document DE 3839809 divulgue un réservoir souple. Pour assurer le maintien d'un tel réservoir, il devient nécessaire de fixer une face entière de celui-ci à une plaque rigide, elle-même fixée au véhicule. Lorsqu'il est rempli, au cours de son utilisation, la pression permet au réservoir de s'adapter à la forme de la cavité du véhicule dans laquelle il doit être placé. Cependant, lorsque le véhicule sera en circulation, ce réservoir ne sera pas toujours plein. De plus, il peut être avantageux d'avoir un réservoir permettant un montage davantage flexible.

L'invention vise à remédier aux inconvénients exposés ci-dessus de la technique antérieure en fournissant un réservoir qui s'auto-adapte au volume disponible, indépendamment de la forme de celui-ci.

Le réservoir auto-adaptable pour véhicule selon l'invention, notamment pour stocker un liquide destiné à au moins un dispositif utilisateur tel qu'un lave-glace et/ou un lave-projecteur, comprend un corps creux pour stocker le liquide, un goulot de remplissage pour le remplissage du liquide dans le corps creux, un orifice de sortie pour un raccordement du réservoir au dispositif utilisateur à travers un conduit d'amenée de liquide, et au moins une patte de fixation pour fixer le réservoir au véhicule. Conformément à l'invention, le corps creux du réservoir est formé au moins partiellement avec un matériau se présentant dans un état souple et élastique lors du montage du réservoir dans un volume disponible du véhicule.

Du fait de l'état souple et élastique du matériau formant le corps creux du réservoir, l'invention autorise un montage particulièrement aisé du réservoir dans le volume disponible.

Selon un mode de réalisation préféré, le matériau du corps creux est un matériau thermodurcissable et le corps creux est rempli avec un fluide chaud après montage du réservoir dans le volume disponible afin de faire prendre au corps creux une forme occupant au moins partiellement le volume disponible et de provoquer un durcissement du matériau thermodurcissable.

Selon une caractéristique préférée, le matériau thermodurcissable est apte à offrir un retrait au durcissement ayant une valeur suffisante pour éviter un frottement du réservoir contre des parties voisines présentes dans son environnement proche. De préférence, le matériau thermodurcissable est choisi parmi les suivants : PVC, PEHD, PEMD, PP, PET et PPS.

Selon un autre caractéristique, le fluide chaud peut être de l'air chaud sous pression.

Avantageusement, le fluide chaud peut être le liquide destiné à être stocké dans le réservoir, qui est chauffé préalablement à son introduction dans le réservoir. Cette caractéristique autorise, en une seule opération, le durcissement du matériau et le remplissage du réservoir.

Selon un autre mode de réalisation préféré, le matériau du corps creux est apte à conserver un état souple et élastique après montage et mise en service du réservoir dans le volume disponible du véhicule. De préférence, le matériau est un élastomère choisi parmi les suivants : élastomère type SANTOPRENE (marque déposée), silicone et élastomère polyuréthane.

Le mode de réalisation décrit brièvement ci-dessus offre l'avantage de fournir un réservoir standard de très faible coût.

D'autres caractéristiques et avantages de la présente l'invention apparaîtront plus clairement à la lecture de la description de modes de réalisation particuliers qui va suivre, cette description étant donnée à titre d'exemple non limitatif et faite en référence aux dessins annexés, dans lesquels :

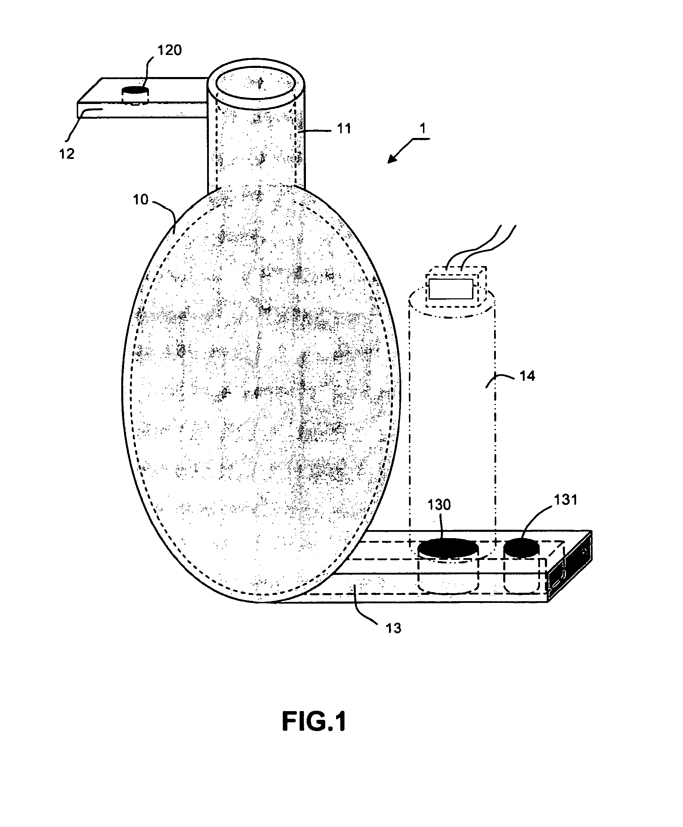

la Fig.1 représente sous une forme simplifiée un réservoir selon l'invention formé essentiellement d'un matériau souple et élastique thermodurcissable ; et
la Fig.1 représente sous une forme simplifiée un autre réservoir selon l'invention formé essentiellement d'un matériau élastomère souple et élastique.

En référence à la Fig.1, il est maintenant décrit un premier mode de réalisation préféré 1 du réservoir selon l'invention. Typiquement, le réservoir 1 est destiné à contenir un liquide de lavage pour alimenter un dispositif lave-glace et/ou un dispositif lave-projecteur équipant le véhicule.

Comme montré à la Fig.1, le réservoir 1 comprend un corps creux 10, un goulot de remplissage 11 et des pattes de fixation supérieure 12 et inférieure 13. Le goulot de remplissage 11 est fermé par un bouchon amovible (non représenté).

Avant la mise en service du réservoir 1 dans un véhicule, le matériau formant le corps 10 se présente dans un état souple et élastique. Le goulot de remplissage 11 et les pattes de fixation 12 et 13 se présentent quant à eux sous une forme rigide.

Dans ce mode de réalisation préféré, le réservoir 1 est formé essentiellement d'un matériau souple et élastique thermodurcissable tel que PVC, PEHD, PEMD, PP, PET ou PPS

La rigidité des parties 11, 12 et 13 est apportée par exemple par des pièces rigides (non représentées) surmoulées dans le matériau thermodurcissable du réservoir 1. Les parties 11, 12 et 13 sont donc composées ici de deux matériaux.

En variante, le réservoir 1 n'est formé que du seul matériau thermodurcissable et la rigidité des parties 11, 12 et 13 est obtenue par une opération de chauffage préalable de celles-ci.

Comme montré à la Fig.1, la patte de fixation inférieure 13 comporte un orifice de sortie de liquide 130. L'orifice 130 est en communication avec le volume intérieur du corps creux 10. L'orifice 130 est prévu pour recevoir une pompe électrique 14 qui est raccordée à un réseau électrique (non représenté) du véhicule et à un conduit d'amenée de liquide (non représenté). La pompe électrique 14 autorise une alimentation sous pression en liquide de lavage du dispositif lave-glace et/ou du dispositif lave-projecteur.

Conformément à l'invention, le réservoir 1 est en premier lieu monté dans le véhicule par fixation des pattes 12 et 13 sur une partie d'assemblage correspondante du véhicule. Typiquement, le réservoir 1 est installé dans le compartiment moteur du véhicule, dans un volume libre correspondant. Des orifices de perçage 120 et 131 sont prévus respectivement dans les pattes de fixation 12 et 13 afin de permettre une fixation par vis du réservoir 1. Selon les cas, la pompe 14 est assemblée au réservoir 1 avant ou après montage du réservoir 1 dans le compartiment moteur du véhicule.

Ensuite, c'est-à-dire une fois le réservoir 1 monté dans le compartiment moteur du véhicule, le réservoir 1 est rempli avec un fluide chaud qui provoque une expansion du corps souple élastique 10 et amène celui-ci à occuper, au moins en partie, le volume disponible. Conformément à l'invention, le fluide chaud est chauffé préalablement à son introduction dans le réservoir 1, à une température apte à provoquer le durcissement du matériau formant le corps 10. Le durcissement du matériau formant le corps 10 donne au réservoir 1 une forme définitive adaptée au volume disponible.

Notons ici que le matériau formant le corps 10 doit être choisi de manière à offrir un retrait au durcissement. Ce retrait devra avoir une valeur suffisante pour éviter des frottements entre le corps 10 et son environnement proche tel que des parois voisines.

Conformément à l'invention, le fluide chaud utilisé pour remplir le réservoir 1 peut par exemple être de l'air sous pression. De préférence, le fluide chaud est tout simplement le liquide de lavage qui a été préalablement chauffé à la température adéquate. Il est ainsi réalisé en une seule opération la conformation du réservoir 1 au volume disponible et le remplissage du réservoir 1 avec le liquide de lavage.

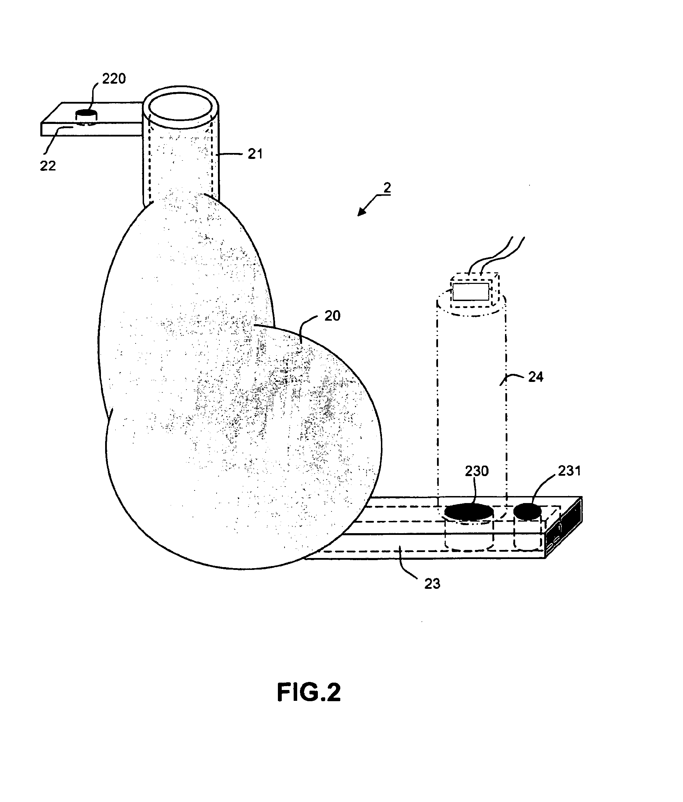

La Fig.2 montre un second mode de réalisation préféré 2 du réservoir selon l'invention.

Le réservoir 2 diffère du réservoir 1 essentiellement par le matériau formant le corps du réservoir. En effet, dans le réservoir 2, le matériau utilisé pour le corps du réservoir est un matériau souple et élastique, mais qui n'est pas thermodurcissable.

De manière analogue au réservoir 1 décrit ci-dessus, le réservoir 2 comprend un corps creux 20, un goulot de remplissage 21 et des pattes de fixation supérieure 22 et inférieure 23. Le goulot de remplissage 21 et les pattes de fixation 22 et 23 se présentent sous une forme rigide.

Le corps 20 est formé d'un matériau souple et élastique tel que par exemple : élastomère type SANTOPRENE (marque déposée), silicone ou élastomère polyuréthane.Le matériau du corps 20 devra être choisi de manière à résister à d'éventuels chocs et frottements contre des parois voisines présentes dans l'environnement proche du réservoir 2. Les caractéristiques de souplesse et élasticité du corps 20 permettent à celui-ci de s'adapter au mieux à l'espace disponible et d'offrir au liquide de lavage un volume de stockage maximal.

La rigidité des parties 21, 22 et 23 est apportée ici, par exemple, par des éléments rigides (non représentés) surmoulés dans le matériau souple et élastique du réservoir 2.

Comme montré à la Fig.2, la patte de fixation inférieure 23 comporte un orifice de sortie de liquide 230. L'orifice 230 est en communication avec le volume intérieur du corps creux 20. L'orifice 230 est prévu pour recevoir une pompe électrique 24 qui est raccordée à un réseau électrique (non représenté) du véhicule et à un conduit d'amenée de liquide (non représenté). La pompe électrique 24 autorise une alimentation sous pression en liquide de lavage du dispositif lave-glace et/ou du dispositif lave-projecteur.

Le réservoir 2 est monté dans le véhicule par fixation des pattes 22 et 23 sur une partie d'assemblage correspondante du véhicule. Typiquement, le réservoir 2 est installé dans le compartiment moteur du véhicule, dans un volume libre correspondant. Des orifices de perçage 220 et 231 sont prévus respectivement dans les pattes de fixation 22 et 23 afin de permettre une fixation par vis du réservoir 2. Selon les cas, la pompe 24 est assemblée au réservoir 2 avant ou après montage du réservoir 2 dans le compartiment moteur du véhicule.

Un fois le réservoir 2 monté dans le véhicule de la manière décrite ci-dessus, celui-ci est alors prêt pour une mise en service immédiate, après un remplissage avec le liquide de lavage.

Bien entendu, la présente invention ne se limite pas aux modes de réalisation préférés décrits ci-dessus pour une application à des dispositifs lave-glace et/ou lave-projecteur. L'homme du métier, instruit par les enseignements contenus dans la présente demande, trouvera différentes applications à la présente invention, par exemple, sous la forme d'un vase d'expansion, dans un circuit de refroidissement d'un moteur thermique.

## Revendications

1. Réservoir auto-adaptable pour véhicule, notamment pour stocker un liquide destiné à au moins un dispositif utilisateur tel qu'un lave-glace et/ou un lave-projecteur, comprenant un corps creux (10, 20) pour stocker ledit liquide, un goulot de remplissage (11, 21) pour le remplissage dudit liquide dans ledit corps creux (10, 20), un orifice de sortie (130, 230) pour un raccordement dudit réservoir (1, 2) audit dispositif utilisateur à travers un conduit d'amenée de liquide, et au moins une patte de fixation (12, 13, 22, 23) pour fixer ledit réservoir (1, 2) audit véhicule, ledit corps creux (10, 20) étant formé au moins partiellement avec un matériau se présentant dans un état souple et élastique lors du montage dudit réservoir (1, 2) dans un volume disponible dudit véhicule, **caractérisé en ce que** ledit matériau est un matériau thermodurcissable, ledit corps creux (10) étant rempli avec un fluide chaud après montage dudit réservoir (1) dans ledit volume disponible afin de faire prendre audit corps creux (10) une forme occupant au moins partiellement ledit volume disponible et de provoquer un durcissement dudit matériau thermodurcissable.

2. Réservoir selon la revendication 1, **caractérisé en ce que** ledit matériau thermodurcissable est apte à offrir un retrait au durcissement ayant une valeur suffisante pour éviter un frottement dudit réservoir (1) contre des parties voisines présentes dans son environnement proche.

3. Réservoir selon la revendication 1 ou 2, **caractérisé en ce que** ledit matériau thermodurcissable est choisi parmi les suivants : PVC, PEHD, PEMD, PP, PET et PPS.

4. Réservoir selon l'une quelconque des revendications 1 à 3, **caractérisé en ce que** ledit fluide chaud est de l'air chaud sous pression.

5. Réservoir selon l'une quelconque des revendications 1 à 4, **caractérisé en ce que** ledit fluide chaud est ledit liquide, qui est chauffé préalablement à son introduction dans le réservoir (1).

6. Réservoir selon l'une quelconque des revendications 1 à 5, **caractérisé en ce que** ladite au moins une patte de fixation (12, 13, 22, 23) est un élément rigide formé par thermodurcissement d'un matériau composant au moins en partie ladite patte de fixation (12, 13, 22, 23) et/ou par surmoulage d'une pièce rigide.

7. Réservoir selon l'une quelconque des revendications 1 à 6, **caractérisé en ce que** ledit goulot de remplissage (11, 21) est un élément rigide formé par thermodurcissement d'un matériau composant au moins en partie ledit goulot de remplissage (11, 21) et/ou par surmoulage d'une pièce rigide.

8. Réservoir selon l'une quelconque des revendications 1 à 7, **caractérisé en ce qu'**il comprend un orifice de sortie de liquide (130, 230) aménagé dans une partie rigide (12, 13, 22, 23) dudit réservoir (1, 2) et apte à coopérer avec une pompe électrique (14, 24).

9. Réservoir selon la revendication 8, **caractérisé en ce que** ledit orifice de sortie de liquide (130, 230) est aménagé dans une patte de fixation rigide inférieure (13, 23) dudit réservoir (1, 2).

## Claims

1. Self-adaptable reservoir for a vehicle, in particular to store a liquid which is destined for at least one user device such as a windscreen washer and/or a headlight washer, comprising a hollow body (10, 20) in order to store the said liquid, a filling neck (11, 21) for filling of the said hollow body (10, 20) with the said liquid, an outlet aperture (130, 230) for a connection of the said reservoir (1, 2) to the said user device via a liquid supply duct, and at least one securing lug (12, 13, 22, 23) to secure the said reservoir (1, 2) to the said vehicle, the said hollow body (10, 20) being formed at least partially by a material which is in a flexible and resilient state when the said reservoir (1, 2) is fitted in an available volume of the said vehicle, **characterised in that** the said material is a thermosetting material, the said hollow body (10) being filled with a hot fluid after the said reservoir (1) has been fitted in the said available volume, in order to make the said hollow body (10) assume a form which occupies the said available volume at least partially, and to give rise to hardening of the said thermosetting material.

2. Reservoir according to claim 1, **characterised in that** the said thermosetting material can provide shrinkage during hardening which has a value sufficient to prevent friction of the said reservoir (1) against adjacent parts which are present in its close environment.

3. Reservoir according to claim 1 or 2, **characterised in that** the said thermosetting material is selected from amongst the following: PVC, PEHD, PEMD, PP, PET and PPS.

4. Reservoir according to any one of claims 1 to 3, **characterised in that** the said hot fluid is pressurised hot air.

5. Reservoir according to any one of claims 1 to 4, **characterised in that** the said hot fluid is the said liquid, which is heated before being introduced into the reservoir (1).

6. Reservoir according to any one of claims 1 to 5, **characterised in that** the said at least one securing lug (12, 13, 22, 23) is a rigid element which is formed by thermosetting of a material which constitutes at least partially the said securing lug (12, 13, 22, 23), and/or by overmoulding of a rigid part.

7. Reservoir according to any one of claims 1 to 6, **characterised in that** the said filling neck (11, 21) is a rigid element formed by thermosetting of a material which constitutes at least partially the said filling neck (11, 21), and/or by overmoulding of a rigid part.

8. Reservoir according to any one of claims 1 to 7, **characterised in that** it comprises a liquid outlet aperture (130, 230) which is provided in a rigid part (12, 13, 22, 23) of the said reservoir (1, 2) and can co-operate with an electric pump (14, 24).

9. Reservoir according to claim 8, **characterised in that** the said liquid outlet aperture (130, 230) is provided in a lower rigid securing lug (13, 23) of the said reservoir (1, 2).

## Patentansprüche

1. Selbstanpassender Behälter für Kraftfahrzeuge, insbesondere zum Speichern einer Flüssigkeit, die für wenigstens eine Nutzungsvorrichtung wie etwa eine Scheibenwaschanlage und/oder eine Scheinwerferwaschanlage bestimmt ist, mit einem Hohlkörper (10, 20) zum Speichern der Flüssigkeit, einem Einfüllstutzen (11, 21) zum Einfüllen der Flüssigkeit in den Hohlkörper (10, 20), einer Auslassöffnung (130, 230) zum Anschließen des Behälters (1, 2) an die Nutzungsvorrichtung über eine Flüssigkeitszulaufleitung und wenigstens einem Befestigungsfuß (12, 13, 22, 23) zum Befestigen des Behälters (1, 2) am Fahrzeug, wobei der Hohlkörper (10, 20) wenigstens teilweise aus einem Material gebildet ist, das bei der Montage des Behälters (1, 2) in einem im Fahrzeug zur Verfügung stehenden Raum einen nachgiebigen und elastischen Zustand aufweist,
**dadurch gekennzeichnet, dass** das Material ein duroplastisches Material ist, wobei der Hohlkörper (10) nach der Montage des Behälters (1) in dem zur Verfügung stehenden Raum mit einem warmen Fluid gefüllt wird, damit der Hohlkörper (10) eine Form annimmt, die den verfügbaren Raum wenigstens zum Teil ausfüllt, und ein Erhärten des duroplastischen Materials bewirkt wird.

2. Behälter nach Anspruch 1,
**dadurch gekennzeichnet, dass** das duroplastische Material beim Erhärten eine Schrumpfung auszuführen vermag, deren Wert ausreicht, um eine Reibung des Behälters (1) an den in seiner nächsten Umgebung vorhandenen benachbarten Teilen zu vermeiden.

3. Behälter nach Anspruch 1 oder 2,
**dadurch gekennzeichnet, dass** das duroplastische Material aus den folgenden Materialien gewählt ist: PVC, PEHD, PEMD, PP, PET und PPS.

4. Behälter nach einem der Ansprüche 1 bis 3,
**dadurch gekennzeichnet, dass** das warme Fluid warme Druckluft ist.

5. Behälter nach einem der Ansprüche 1 bis 4,
**dadurch gekennzeichnet, dass** das warme Fluid die Flüssigkeit ist, die vor ihrem Einführen in den Behälter (1) erwärmt wird.

6. Behälter nach einem der Ansprüche 1 bis 5,
**dadurch gekennzeichnet, dass** der wenigstens eine Befestigungsfuß (12, 13, 22, 23) ein starres Element ist, das durch Warmhärtung eines den Befestigungsfuß (12, 13, 22, 23) wenigstens zum Teil bildenden Materials und/oder durch Umspritzen eines starren Teils gebildet ist.

7. Behälter nach einem der Ansprüche 1 bis 6,
**dadurch gekennzeichnet, dass** der Einfüllstutzen (11, 21) ein starres Element ist, das durch Warmhärtung eines den Einfüllstutzen (11, 21) wenigstens zum Teil bildenden Materials und/oder durch Umspritzen eines starren Teils gebildet ist.

8. Behälter nach einem der Ansprüche 1 bis 7,
**dadurch gekennzeichnet, dass** er eine Flüssigkeitsauslassöffnung (130, 230) umfasst, die in einem starren Teil (12, 13, 22, 23) des Behälters (1, 2) ausgebildet ist und mit einer elektrischen Pumpe (14, 24) zusammenzuwirken vermag.

9. Behälter nach Anspruch 8,
**dadurch gekennzeichnet, dass** die Flüssigkeitsauslassöffnung (130, 230) in einem starren, unteren Befestigungsfuß (13, 23) des Behälters (1, 2) ausgebildet ist.
